Europäisches Patentamt

(19) European Patent Office

Office européen des brevets

(11) Publication number: **0 049 923**
**B1**

(12) **EUROPEAN PATENT SPECIFICATION**

(45) Date of publication of patent specification: **07.08.85**

(51) Int. Cl.⁴: **B 65 G 47/88,** B 65 B 35/26

(21) Application number: **81201099.9**

(22) Date of filing: **02.10.81**

(54) **Device for individual conveyance of a row of cylindrical objects further along a circular path by means of a rotatable driving member.**

(30) Priority: **09.10.80 NL 8005601**

(43) Date of publication of application:
**21.04.82 Bulletin 82/16**

(45) Publication of the grant of the patent:
**07.08.85 Bulletin 85/32**

(84) Designated Contracting States:
**AT BE CH DE FR GB IT LI LU NL SE**

(56) References cited:
**DE-A-2 644 137**
**FR-A-2 052 171**
**GB-A-2 023 082**

(73) Proprietor: **Thomassen & Drijver-Verblifa N.V.**
**Zutphenseweg 51**
**NL-7418 AJ Deventer (NL)**

(72) Inventor: **van Doren, Hendrik Dirk**
**No. 73 Boutensgaarde**
**NL-7414 WE Deventer (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a device for the conveyance of each one of a row of cylindrical objects along a path shaped in the form of an arc of a circle by means of a rotatable cam disc, the peripheral surface of which comprises at least one at least partially spiral-shaped part.

A device of this kind is known from GB—A— 2 023 082 and DE—A—2 644 137. GB—A— 2 023 082 describes a system adapted for guiding a cylindrical object in a curved path on a conveyor. As a result of the shape of the peripheral surface of the rotatable cam disc a more or less continuous movement of the objects is obtained, thus avoiding the occurrence of inertia forces which might cause faulty operation. Such inertia forces are likely to occur in the device disclosed in DE—A—2 644 137, in which the spiral-shape is not continuous along the operative cam surface, so that a shock-wise movement of the objects is bound to occur.

The invention has for its object to provide a device, which permits the positioning of the objects with extreme accuracy at a processing station, whilst inertia forces as a source of disturbance and faulty operation are eliminated.

Thereto the invention provides a device of the kind described in the preamble, said device being characterized in that said peripheral surface comprises, in sequence starting from the point radially furthest from the axis of rotation of the cam disc, a part shaped in the form of an arc of a circle and a spiral-shaped part, the path shaped in the form of an arc of a circle being adjoined by a guide path, at the end of which is provided a stop member positioned such that an object to be transported accurately fits between said stop member and that part of the cam disc which has the form of an arc of a circle and in that furthermore means are provided for removing in a direction parallel to the axis of rotation of the cam disc each object being in contact with the stop member.

The stop member may have at least two impact surfaces. When using two impact surfaces the object concerned is completely fixed in place by the two surfaces and the arcuate part of the cam disc. As an alternative, the stop member may have a shape corresponding with that of the objects.

The invention will now be described with reference to the drawings, showing in:

Fig. 1 a schematic view of a processing equipment, the conveying device embodying the invention forming part thereof; and

Fig. 2 an embodiment of the device in accordance with the invention, which is provided with means for maintaining an immovable, accurately defined position of each conveyed object for a given time interval.

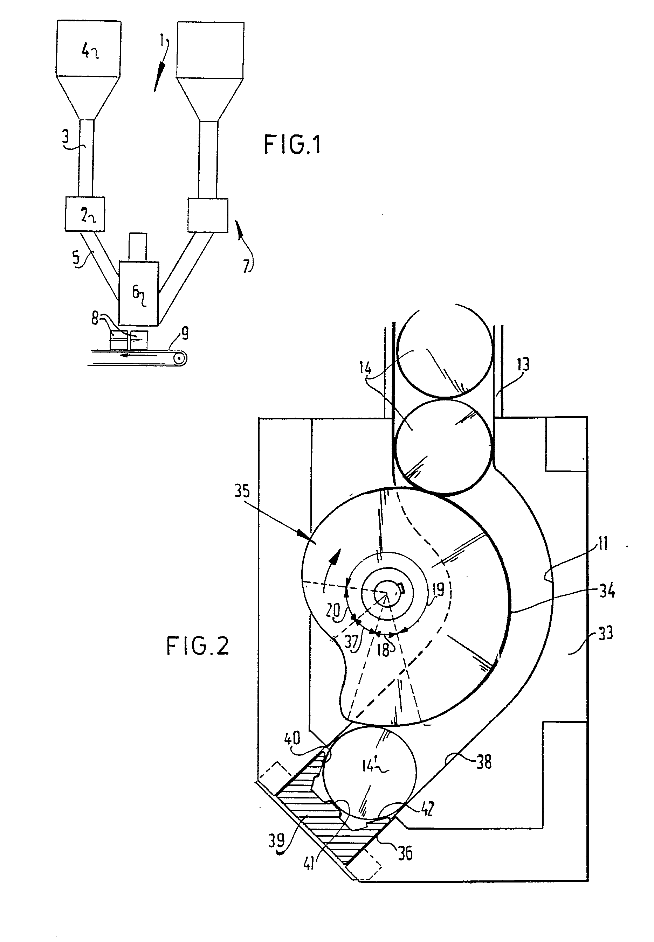

Fig. 1 shows a processing equipment 1 comprising a device 2 embodying the invention. Above the device 2 is arranged a pipe 3 holding a vertical row or column of tins originating from a storage station 4. Through a delivery gutter 5 the tins conveyed one by one by the device are fed to the processing station 6, which communicates with a dosing device 7. The operation of the dosing device 7 is linked by means not shown to the conveying device embodying the invention in a manner such that at each arrival of a tin at the station 6 a corresponding amount of filling material is dispensed by the dosing device 7. After completion of this operation the filled tin 8 is further transported by a conveyor belt 9.

Fig. 2 shows a device 33 embodying the invention comprising a cam disc 35 for conveying each object 14 to a processing station 36, where the object has to be immovably and accurately positioned for a given time interval.

In this important embodiment the peripheral surface 34 has three differently shaped parts. These three parts are briefly indicated in the Figure by the corresponding angles of subtension to the centre of rotation of the disc. The first part 18 has the shape of an arc of a circle, the second part 19 has the shape of a linear spiral and the third part 20 has the shape of a quadratic spiral.

An operative cam surface 37 is located between the parts 18 and 20.

With the arcuate gutter 11 is connected a guide path 38, at the end of which a stop member 39 is provided. In the embodiment shown in Fig. 2 the member 39 has three stop surfaces 40, 41, 42.

In the situation illustrated a cylindrical object 14' is located at the processing station 36. It is supported along three axial lines formed by the surfaces 40, 41, 42; from the other side it is held enclosed along an axial line by the arcuated part 18 of the cam disc 35. This embracement can be maintained at the longest for the time interval for which the object 14' is in contact with the part 18. This time interval is equal to the quotient of the angle subtended by the part 18 and the angular speed of the cam 35. Within this time interval of a standstill, also termed a "dwell-interval" the object can be treated. The object 14' is removed in an axial direction before the next following object arrives at said place.

## Claims

1. A device (33) for the conveyance of each one of a row of cylindrical objects (14) along a path (11) shaped in the form of an arc of a circle by means of a rotatable cam disc (35), the peripheral surface (34) of which comprises at least one at least partially spiral-shaped part (19, 20), characterized in that said peripheral surface comprises, in sequence starting from the point radially furthest from the axis of rotation of the cam disc, a part shaped in the form of an arc of a circle (18) and a spiral-shaped part, the path (11) shaped in the form of an arc of a circle being adjoined by a guide path (38), at the end of which is provided a stop member (39) positioned such that an object (14') to be transported accurately fits between said stop member (39) and that part (18) of the cam disc (35) which has the form of an arc of a circle, and in that furthermore means are provided for removing in a direction parallel to the axis of rotation of the cam disc each object (14') being in contact with the stop member (39).

2. The device as claimed in claim 1 characterized in that the spiral-shaped part comprises a linearly spiral-shaped part (19) and a quadratically spiral-shaped part (20).

3. The device as claimed in claim 1 or 2 characterized in that the stop member (39) has at least two impact surfaces (40, 41, 42).

4. The device as claimed in claim 1 or 2 characterized in that the stop member (39) has a shape corresponding with the shape of the objects (14).

## Patentansprüche

1. Vorrichtung (33) zur Beförderung eines jeden aus einer Reihe zylindrischer Gegenstände (14) entlang einer kreisbogenförmigen Bahn (11) mittels einer drehbaren Nockenscheibe (35), deren periphere Oberfläche (34) zumindest einen mindestens teilweise spiralförmigen Abschnitt (19, 20) enthält, dadurch gekennzeichnet, daß

— diese periphere Oberfläche in Reihenfolge ausgehend vom radial am weitesten von der Rotationsachse der Nockenscheibe entfernten Punkt einen kreisbogenförmigen Abschnitt (18) und einen spiralförmigen Abschnitt enthält,

— an die kreisbogenförmige Bahn (11) eine Führungsbahn (38) angrenzt, an deren Ende ein in der Weise angeordnetes Anschlagteil (39) vorgesehen ist, daß ein zu transportierender Gegenstand (14') genau zwischen das Anschlagteil (39) und den kreisbogenförmigen Abschnitt (18) der Nockenscheibe (35) paßt, und

— weiterhin Mittel zum Entfernen des Gegenstandes (14') in einer Richtung parallel zur Rotationsachse der Nockenscheibe vorgesehen sind und jeder Gegenstand (14') dabei in Kontakt mit dem Anschlagteil (39) ist.

2. Vorrichtung nach Anspruch 1, dadurch gekennzeichnet,

daß der spiralförmige Abschnitt einen linear spiralförmigen Abschnitt (19) und einen quadratisch spiralförmigen Abschnitt (20) enthält.

3. Vorrichtung nach Anspruch 1 oder 2, dadurch gekennzeichnet,

daß das Anschlagteil (39) zumindest zwei Anschlagflächen (40, 41, 42) enthält.

4. Vorrichtung nach Anspruch 1 oder 2, dadurch gekennzeichnet,

daß das Anschlagteil (39) eine mit der Form der Gegenstände (14) korrespondierende Gestalt aufweist.

## Revendications

1. Un dispositif (33) pour le transport un à un d'une rangée d'objets cylindriques (14) le long d'un trajet (11) ayant la forme d'un arc de cercle, au moyen d'un disque de came rotatif (35) dont la surface périphérique (34) comprend au moins une partie (19, 20) de forme au moins partiellement en spirale, caractérisé en ce que ladite surface périphérique comprend successivement, en partant du point radialement le plus éloigné de l'axe de rotation du disque de came, une partie ayant la forme d'un arc de cercle (18) et une partie en forme de spirale, le trajet (11) présentant la forme d'un arc de cercle se prolongeant par un trajet de guidage (38) à l'extrémité duquel est montée une pièce de butée (39) qui est disposée de manière telle qu'un objet (14') à transporter s'adapte de manière précise entre cette pièce de butée (39) et la partie (18) du disque de came (35) qui a la forme d'un arc de cercle, et en ce qu'il est en outre prévu des moyens pour extraire, suivant une direction parallèle à l'axe de rotation du disque de came, chaque objet (14') qui est en contact avec cette pièce de butée (39).

2. Le dispositif revendiqué dans la revendication 1, caractérisé en ce que la partie en forme de spirale comprend une partie en forme de spirale linéaire (19) et une partie en forme de spirale quadratique (20).

3. Le dispositif revendiqué dans la revendication 1 ou 2, caractérisé en ce que la pièce de butée (39) a au moins deux surfaces de contact (40, 41, 42).

4. Le dispositif revendiqué dans la revendication 1 ou 2, caractérisé en ce que la pièce de butée (39) a une forme correspondant à la forme des objets (14).

0 049 923

FIG.1

FIG.2

1